(19) Europäisches Patentamt / European Patent Office / Office européen des brevets

(11) **EP 4 436 010 A1**

(12) **EUROPEAN PATENT APPLICATION**
published in accordance with Art. 153(4) EPC

(43) Date of publication:
**25.09.2024 Bulletin 2024/39**

(21) Application number: **21964683.3**

(22) Date of filing: **16.11.2021**

(51) International Patent Classification (IPC):
***H02K 1/276*** *(2022.01)*

(52) Cooperative Patent Classification (CPC):
**H02K 1/2766; H02K 29/03;** H02K 2213/03;
Y02T 10/64

(86) International application number:
**PCT/JP2021/042107**

(87) International publication number:
**WO 2023/089667 (25.05.2023 Gazette 2023/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **KABUSHIKI KAISHA TOSHIBA
Minato-ku
Tokyo 105-0023 (JP)**

• **Toshiba Infrastructure Systems &
Solutions Corporation
Kawasaki-shi, Kanagawa 212-0013 (JP)**

(72) Inventors:
• **UCHIDA, Hidenori
Kawasaki-shi, Kanagawa 212-0013 (JP)**
• **YAMAGISHI, Daisuke
Kawasaki-shi, Kanagawa 212-0013 (JP)**

(74) Representative: **AWA Sweden AB
Box 5117
200 71 Malmö (SE)**

(54) **DYNAMO-ELECTRIC MACHINE ROTOR**

(57) Embodiments aim to provide a rotor of a rotary electrical machine capable of suppressing leakage flux and reducing a stress against a centrifugal force.

In the rotor of the embodiments, a first region surrounded by a bridge inner circumferential edge, a bridge center line, a circumscribed circle of a rotor core, and an inner wall of a first magnet hole and a second region surrounded by the bridge inner circumferential edge, the bridge center line, the circumscribed circle of the rotor core, and an inner wall of a second magnet hole are asymmetrical with respect to a d-axis, and the rotor core has a structure satisfying the following equation.

$$\sum S_{km} r_m r_{bm} \sin(\theta_{bkm} - \theta_{km}) = \sum S_{jn} R_n R_{bn} \sin(\theta_{bjn} - \theta_{jn})$$

FIG. 3

Processed by Luminess, 75001 PARIS (FR)

EP 4 436 010 A1

**Description**

Technical Field

Embodiments of the present invention relate to a rotor of a rotary electrical machine.

Background Art

Permanent magnet type rotary electrical machines using permanent magnets are widely used as rotary electrical machines for vehicles. In such rotary electrical motors, a rotor is configured to rotate by the rotating magnetic field generated by a stator. For example, a rotary electrical machine in which inner and outer sides of a rotor core are connected by a center bridge and a magnet hole in the rotor core is connected to an air gap between the rotor and stator is known.

Citation List

Patent Literature

Patent Literature 1: JP 2020-14322 A

Summary of Invention

Technical Problem

The embodiments described herein aim to provide a rotor of a rotary electrical machine capable of suppressing leakage flux and reducing a stress against a centrifugal force.

Solution to Problem

According to one embodiment, a rotor of a rotary electrical machine, comprises: a cylindrical shaft; a rotor core configured by stacking a plurality of annular electromagnetic steel sheets including an inner hole into which the shaft is inserted, in a direction of a central axis of the shaft, each including a first magnet hole and a second magnet hole penetrating to a cylindrical outer circumferential surface; and a first permanent magnet inserted into the first magnet hole and a second permanent magnet inserted into the second magnet hole, constituting a magnetic pole in the rotor core, when an axis passing through a central axis of the shaft and a center of the magnetic pole in a circumferential direction is referred to as a d-axis, a straight line passing through a first corner closest to the d-axis of the first permanent magnet and a second corner closest to the d-axis of the second permanent magnet is referred to as a first straight line, a straight line passing through the first corner and the central axis is referred to as a second straight line, a straight line passing through the second corner and the central axis is referred to as a third straight line, a point on a innermost circumferential side between the second straight line and the third straight line, among points on an inner wall of the first magnet hole, is referred to as a first point, a point on a innermost circumferential side between the second straight line and the third straight line, among points on an inner wall of the second magnet hole, is referred to as a second point, and a straight line passing through the first point and the second point is referred to as a fourth straight line, a bridge that is a thick portion of the rotor core existing in a region surrounded by the first straight line, the second straight line, the third straight line, and the fourth straight line, when a straight line equidistant from the first straight line and the fourth straight line is referred to as a fifth straight line, a point on the fifth straight line among the points on the inner wall of the first magnet hole is referred to as a third point, a point on the fifth straight line among the points on the inner wall of the second magnet hole is referred to as a fourth point, a point on the fifth straight line equidistant from the third point and the fourth point is referred to as a middle point, a straight line passing through the middle point and the central axis is referred to as a bridge center line, a line segment connecting the first point and the second point on the fourth straight line is referred to as a bridge inner circumferential edge, a hole and a notch existing in a first region surrounded by the bridge inner circumferential edge, the bridge center line, a circumscribed circle of the rotor core, and an inner wall of the first magnet hole, of the rotor core, are referred to as Km, an area of a region surrounded by a ridge line of the hole Km and an area of a region surrounded by a ridge line of the notch Km and the circumscribed circle of the rotor core are referred to as Skm, a center of gravity in a case where thick portions exist in the region surrounded by the ridge line of the hole Km and the region surrounded by the ridge line of the notch Km and the circumscribed circle of the rotor core is referred to as Kgm, a distance from the central axis to the center of gravity Kgm is referred to as rm, a distance from an intersection of the bridge center line and the fourth straight line to the center of gravity Kgm is referred to as rbm, a straight line passing through the central axis and the center of gravity Kgm is referred to as a sixth straight line, an angle formed by the sixth straight line and the bridge center line is referred to as $\theta km$, a straight line passing through the intersection and the center of gravity Kgm is referred to as a seventh straight line, an angle formed by the seventh straight line and the bridge center line is referred to as $\theta bkm$ (where each m mentioned above is a natural number), a hole and a notch existing in a second region surrounded by the bridge inner circumferential edge, the bridge center line, the circumscribed circle of the rotor core, and an inner wall of the second magnet hole, of the rotor core, are referred to as Jn, an area of a region surrounded by a ridge line of the hole Jn and an area of a region surrounded by a ridge line of the notch Jn and the circumscribed circle of the rotor core are referred to as Sjn, a center of gravity in a case where thick portions exist in the region surrounded by the ridge line of the hole Jn and the region surrounded by the ridge line of the notch Jn and the circumscribed circle of the rotor core is referred to as Jgn, a distance from the central axis to the center of gravity Jgn is referred to as Rn, a distance from the intersection to the center of gravity Jgn is referred to as Rbn, a straight line passing through the central axis and the center of gravity Jgn is referred to as an eighth straight line, an angle formed by the eighth straight line and the bridge center line is referred to as $\theta jn$, a straight line passing through the intersection and the center of gravity Jgn is referred to as a ninth straight line, and an angle formed by the ninth straight line and the bridge center line is referred to as $\theta bjn$ (where each n mentioned above is a natural number), the first region and the second region being asymmetric with respect to the d-axis and the rotor core having a structure satisfying the following equation.

$$\sum S_{km} r_m r_{bm} \sin(\theta_{bkm} - \theta_{km}) = \sum S_{jn} R_n R_{bn} \sin(\theta_{bjn} - \theta_{jn})$$

According to another embodiment, a rotor of a rotary electrical machine, comprises: a cylindrical shaft; a rotor core configured by stacking a plurality of annular electromagnetic steel sheets including an inner hole into which the shaft is inserted, in a direction of a central axis of the shaft, each including a first magnet hole and a second magnet hole penetrating to a cylindrical outer circumferential surface, and a hole located between the first magnet hole and the second magnet hole in a circumferential direction; and a first permanent magnet inserted into the first magnet hole and a second permanent magnet inserted into the second magnet hole, constituting a magnetic pole in the rotor core, when an axis passing through a central axis of the shaft and a center of the magnetic pole in a circumferential direction is referred to as a d-axis, a straight line passing through a first corner closest to the d-axis of the first permanent magnet and a second corner closest to the d-axis of the second permanent magnet is referred to as a first straight line, a straight line passing through the first corner and the central axis is referred to as a second straight line, a straight line passing through the second corner and the central axis is referred to as a third straight line, a point on a innermost circumferential side between the second straight line and the third straight line, among points on an inner wall of the first magnet hole, is referred to as a first point, a point on a innermost circumferential side between the second straight line and the third straight line, among points on an inner wall of the second magnet hole, is referred to as a second point, and a straight line passing through the first point and the second point is referred to as a fourth straight line, a first bridge and a second bridge that are thick portions of the rotor core existing in a region surrounded by the first straight line, the second straight line, the third straight line, and the fourth straight line, when a straight line equidistant from the first straight line and the fourth straight line is referred to as a fifth straight line, a point on the fifth straight line among the points on the inner wall of the first magnet hole is referred to as a third point, a point on the fifth straight line between the second straight line and the d-axis among the points on the inner wall of the hole is referred to as a fourth point, a point on the fifth straight line between the d-axis and the third straight line among the points on the inner wall of the hole is referred to as a fifth point, a point on the fifth straight line among the points on the inner wall of the second magnet hole is referred to as a sixth point, a point equidistant from the third point and the fourth point on the fifth straight line is referred to as a first middle point, a point equidistant from the fifth point and the sixth point on the fifth straight line is referred to as a second middle point, a straight line passing through the first middle point and the central axis is referred to as a first bridge center line, a straight line passing through the second middle point and the central axis is referred to as a second bridge center line, a line segment connecting the first point and the second point on the fourth straight line is referred to as a bridge inner circumferential edge, a hole and a notch existing in a first region surrounded by the bridge inner circumferential edge, the first bridge center line, a circumscribed circle of the rotor core, and an inner wall of the first magnet hole, of the rotor core, are referred to as Km, an area of a region surrounded by a ridge line of the hole Km and an area of a region surrounded by a ridge line of the notch Km and the circumscribed circle of the rotor core are referred to as Skm, a center of gravity in a case where thick portions exist in the region surrounded by the ridge line of the hole Km and the region surrounded by the ridge line of the notch Km and the circumscribed circle of the rotor core is referred to as Kgm, a distance from the central axis to the center of gravity Kgm is referred to as rm, a distance from a first intersection of the first bridge center line and the fourth straight line to the center of gravity Kgm is referred to as rbm, a straight line passing through the central axis and the center of gravity Kgm is referred to as a sixth straight line, an angle formed by the sixth straight line and the first bridge center line is referred to as $\theta km$, a straight line passing through the first intersection and the center of gravity Kgm is referred to as a seventh straight line, an angle formed by the seventh straight line and the first bridge center line is referred to as θbkm (where each m mentioned above is a natural number), a hole and a notch existing in a second region surrounded by the bridge inner circumferential edge, the second bridge center line, a circumscribed circle of the rotor core, and an inner wall of the second magnet hole, of the rotor core, are referred to as Jn, an area of a region surrounded by a ridge line of the hole Jn and an area of a region surrounded by the ridge line of the notch Jn and the circumscribed circle of the rotor core are referred to as Sjn, a center of gravity in a case where thick portions exist in the region surrounded by the ridge line of the hole Jn and the region surrounded by the ridge line of the notch Jn and the circumscribed circle of the rotor core is referred to as Jgn, a distance from the central axis to the center of gravity Jgn is referred to as Rn, a distance from a second intersection of the second bridge center line and the fourth straight line to the center of gravity Jgn is referred to as Rbn, a straight line passing through the central axis and the center of gravity Jgn is referred to as an eighth straight line, an angle formed by the eighth straight line and the second bridge center line is referred to as θjn, a straight line passing through the second intersection and the center of gravity Jgn is referred to as a ninth straight line, and an angle formed by the ninth straight line and the second bridge center line is referred to as θbjn (where each n mentioned above is a natural number), the first region and the second region being asymmetric with respect to the d-axis and the rotor core having a structure satisfying the following equation.

$$\sum S_{km} r_m r_{bm} \sin(\theta_{bkm} - \theta_{km}) = \sum S_{jn} R_n R_{bn} \sin(\theta_{bjn} - \theta_{jn})$$

Brief Description of Drawings

FIG. 1 is a cross-sectional view showing a rotary electrical machine 1.
FIG. 2 is a transverse cross-sectional view taken along line A-B of the rotor 3 of the rotary electrical machine 1 shown in FIG. 1.
FIG. 3 is an enlarged transverse cross-sectional view showing the rotor core 32 for one magnetic pole of the rotor 3.
FIG. 4 is an enlarged transverse cross-sectional view showing the rotor 3 for one pole shown in FIG. 3.
FIG. 5 is an enlarged transverse cross-sectional view showing the rotor core 32 for one magnetic pole of the rotor 3.
FIG. 6 is an enlarged transverse cross-sectional view showing the rotor 3 for one pole shown in FIG. 5.
FIG. 7 is an enlarged transverse cross-sectional view showing the rotor core 32 for one magnetic pole of the rotor 3.
FIG. 8 is an enlarged transverse cross-sectional view showing the rotor 3 for one pole shown in FIG. 7.

Mode for Carrying Out the Invention Embodiments will be described hereinafter with reference to the accompanying drawings. The disclosure is merely an example, and proper changes in keeping with the spirit of the invention, which are easily conceivable by a person of ordinary skill in the art, come within the scope of the invention as a matter of course. In addition, in some cases, in order to make the description clearer, the widths, thicknesses, shapes and the like, of the respective parts are illustrated schematically in the drawings, rather than as an accurate representation of what is implemented. However, such schematic illustration is merely exemplary, and in no way restricts the interpretation of the invention. In addition, in the specification and drawings, structural elements which function in the same or a similar manner to those described in connection with preceding drawings are denoted by like reference numbers, detailed description thereof being omitted unless necessary.

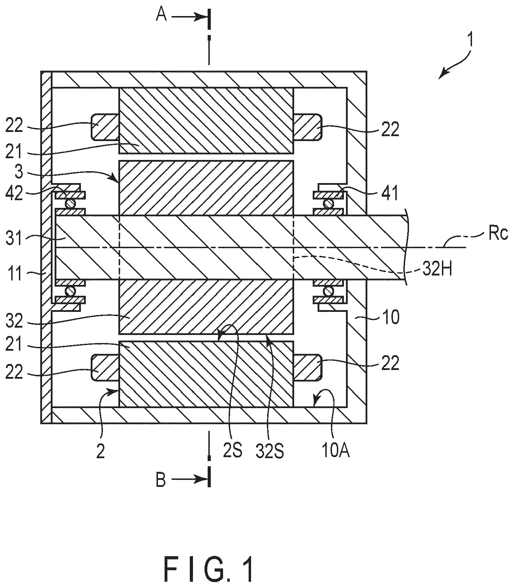

FIG. 1 is a cross-sectional view showing a rotary electrical machine 1.

The rotary electric machine 1 of the embodiments is configured as an interior permanent magnet (IPM) rotary electrical machine, and is applied to, for example, a drive motor or a generator in a hybrid vehicle (HEV) or an electric vehicle (EV). The rotary electrical machine 1 comprises a substantially cylindrical stator 2, a substantially cylindrical rotor 3 in which a permanent magnet is embedded, a housing 10 that accommodates the stator 2 and the rotor 3, and a cover 11 that is fixed to the housing 10.

The stator 2 comprises a cylindrical stator core 21 and a wire 22 wound around the stator core 21. The stator core 21 is configured as a stacked layer body in which a plurality of magnetic materials, for example, annular electromagnetic steel sheets are stacked concentrically. The housing 10 has a cylindrical inner circumferential surface 10A. The stator core 21 is fixed to the inner circumferential surface 10A. The structure of the stator 2 is not particularly limited, but can widely adopt a general structure.

The rotor 3 is located inside the stator 2 and is arranged with a small gap (air gap) between the rotor and the stator 2. The rotor 3 comprises a cylindrical shaft 31, a substantially cylindrical rotor core 32, and a permanent magnet not shown in FIG. 1. The shaft 31 and the rotor core 32 are configured to be rotatable about a central axis (center of rotation) Rc.

Bearings 41 and 42 are mounted on the shaft 31. The bearings 41 and 42 are secured by the housing 10 and the cover 11. The shaft 31 is supported on the housing 10 and the cover 11 via the bearings 41 and 42 so as to be rotatable around the central axis Rc. In the example illustrated, an example of a bearing structure that supports the shaft 31 is simply shown and descriptions of its detailed structure are omitted.

The rotor core 32 is configured as a stacked layer body formed by stacking a large number of annular electromagnetic steel sheets of a magnetic material, for example, silicon steel, or the like in the direction of the central axis Rc of the shaft 31. An outer circumferential surface 32S of the rotor core 32 has a cylindrical shape and is opposed to the inner circumferential surface of the stator 2 with a small gap. The rotor core 32 includes an inner hole 32H in its center. The inner hole 32H passes through the rotor core 32 in the axial direction. The shaft 31 is inserted into the inner hole 32H. For example, the rotor core 32 is secured to the shaft 31 by shrink-fitting the shaft 31.

In this specification, the axial direction corresponds to a direction in which the shaft 31 or the central axis C shown in FIG. 1 extends. In addition, the radial direction to be described later corresponds to a direction in which a straight line connecting the central axis C with an outer circumferential surface 32S of the rotor core 32 extends in a cross-section orthogonal to the central axis C, and the circumferential direction corresponds to a direction along the circumference of the rotor 3 in the cross-section.

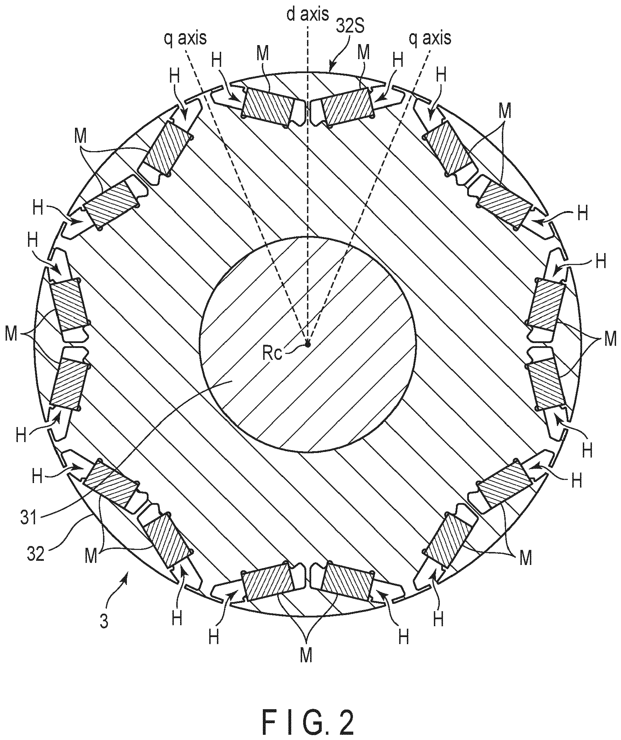

FIG. 2 is a transverse cross-sectional view taken along line A-B of the rotor 3 of the rotary electrical machine 1 shown in FIG. 1.

In this embodiment, the rotor 3 has a plurality of magnetic poles, for example, eight magnetic poles. On the rotor core 32, an axis extending in the radial direction of the rotor core 32 through the central axis Rc and the boundary between magnetic poles adjacent in the circumferential direction is referred to as a q-axis, and an axis electrically spaced apart from the q-axis by 90° in the circumferential direction, i.e., an axis passing through the center of one magnetic pole in the circumferential direction and the central axis C is referred to as a d-axis. A direction in which the flux linkage formed by the stator can easily flow is referred to a q-axis. The d-axis and the q-axis are provided alternately in the circumferential direction of the rotor core 32 and at a predetermined phase. One magnetic pole of the rotor core 32 indicates a region between two q-axes adjacent in the circumferential direction (1/8 circumferential angle region).

The rotor 3 comprises a shaft 31, a rotor core 32, and a plurality of permanent magnets M. A plurality of permanent magnets M, for example, two permanent magnets M, are inserted into the rotor core 32 for every magnetic pole. At each pole, two permanent magnets M are arranged with the d-axis interposed therebetween.

For example, the permanent magnet M is formed in an elongated flat plate shape having a rectangular transverse cross-section, and has a length substantially equal to an axial length of the rotor core 32. In other words, each of the permanent magnets M is embedded over a substantially entire length of the rotor core 32. The permanent magnet M may be formed by combining a plurality of magnets divided in an axial direction. Each permanent magnet M has a pair of long sides and a pair of short sides in a transverse cross-section. The shape of the transverse cross-section of the permanent magnet M is not limited to a rectangular shape (rectangle), but may be a parallelogram. Each of the permanent magnets M is magnetized in the direction perpendicular to the long side. Two permanent magnets M located on both sides in the circumferential direction with the d-axis interposed therebetween, i.e., two permanent magnets M constituting one magnetic pole are arranged so as to have the same magnetization direction. In addition, two permanent magnets M located on both sides in the circumferential direction with the q-axis interposed therebetween are arranged such that the magnetization directions thereof are opposite to each other.

The rotor core 32 includes a plurality of magnet holes H. Each of the plurality of magnet holes H passes through the rotor core 32 in the axial direction. The permanent magnet M is inserted into the magnet hole H. Such a magnet hole H may be referred to as a magnet holding hole, a magnet insertion hole, or the like. When one magnetic pole is focused, the magnet holes H are formed on both sides in the circumferential direction with the d-axis interposed therebetween. These two magnet holes H are arranged such that the distance in the circumferential direction gradually increases from the central axis Rc toward the outer circumferential surface 32S of the rotor core 32 in the transverse cross-section. In addition, each of the plurality of magnet holes H penetrates to the cylindrical outer circumferential surface 32S. The magnetic flux leakage is thereby suppressed.

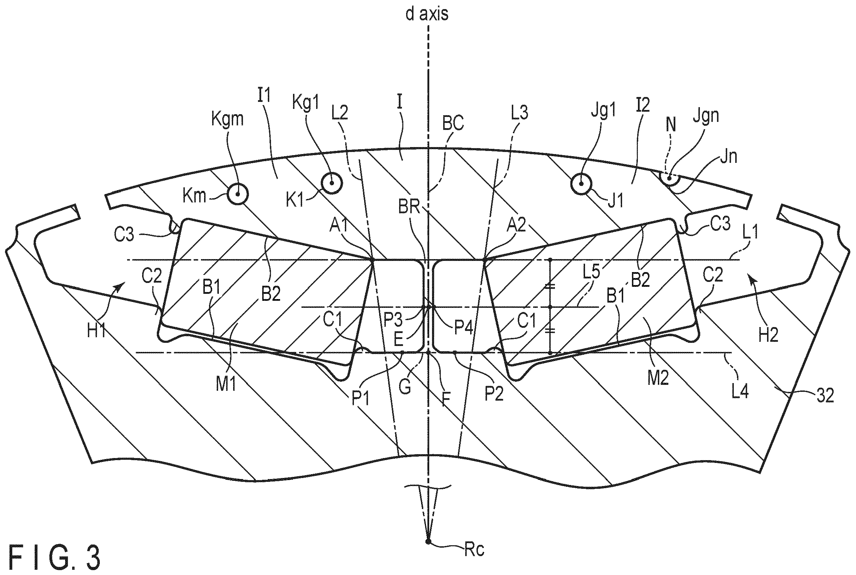

FIG. 3 is an enlarged transverse cross-sectional view showing the rotor core 32 for one magnetic pole of the rotor 3.

In the example shown in FIG. 3, the magnet hole located on the left side with the d-axis interposed therebetween is referred to as a first magnet hole H1, the permanent magnet inserted into the first magnet hole H1 is referred to as a first permanent magnet M1, a magnet hole located on the right side with the d-axis interposed therebetween is referred to as a second magnet hole H2, and the permanent magnet inserted into the second magnet hole H2 is referred to as a second permanent magnet M2. The first permanent magnet M1 and the second permanent magnet M2 have rectangular transverse cross-sections.

The rotor core 32 includes a pair of holding protrusions C1 and C2 protruding from an edge B1 opposed to one long side of the first permanent magnet M1 at both longitudinal ends of the first permanent magnet M1, and a holding protrusion C3 protruding from an edge B2 opposed to the other long side of the first permanent magnet M1. The holding protrusion C3 is opposed to the holding protrusion C2. The first permanent magnet M1 is held by these holding protrusions C1 to C3. In addition, the rotor core 32 also includes holding protrusions C1 to C3 to hold the second permanent magnet M2.

The rotor core 32 includes a bridge BR between the first magnet hole H1 and the second magnet hole H2. The bridge BR exists within a region defined below. In other words, a corner closest to the d-axis, of four corners of the first permanent magnet M1, is referred to as a first corner A1. A corner closest to the d-axis, of four corners of the second permanent magnet M2, is referred to as a second corner A2. A straight line passing through the first corner A1 and the second corner A2 is referred to as a first straight line L1. A straight line passing through the first corner A1 and the central axis Rc is referred to as a second straight line L2. A straight line passing through the second corner A2 and the central axis Rc is referred to as a third straight line L3. A point on an innermost circumferential side in the radial direction between the second straight line L2 and the third straight line L3, among points on the inner wall of the first magnet hole H1, is referred to as a first point P1. A point on an innermost circumferential side in the radial direction between the second straight line L2 and the third straight line L3, among points on the inner wall of the second magnet hole H2, is referred to as a second point P2. A straight line passing through the first point P1 and the second point P2 is referred to as a fourth straight line L4. One bridge BR illustrated in the drawing is a thick portion of the rotor core 32, which exists in a region surrounded by the first straight line L1, the second straight line L2, the third straight line L3, and the fourth straight line L4. The bridge BR extends in the radial direction.

A bridge center line BC will be described with reference to FIG. 3.

In this specification, the bridge center line BC is defined as described below. In other words, when a straight line equidistant from the first straight line L1 and the fourth straight line L4 is referred to as a fifth straight line L5, the bridge BR intersects the fifth straight line L5. A point on the fifth straight line L5 among the points on the inner wall of the first magnet hole H1 is referred to as a third point P3. A point on the fifth straight line L5 among the points on the inner wall of the second magnet hole H2 is referred to as a fourth point P4. A point on the fifth straight line L5 equidistant from the third point P3 and the fourth point P4 is referred to as a middle point E. At this time, the bridge center line BC is defined as a line passing through the middle point E and the central axis Rc. The bridge center line BC having this definition coincides with the d-axis. A point where the bridge center line BC intersects the fourth straight line L4 is referred to as an intersection point F.

When a line segment connecting the first point P1 and the second point P2 on the fourth straight line L4 is defined as a bridge inner circumferential edge G, the radially outer circumferential side than a bridge inner circumferential edge G of the rotor core 32 is referred to as a core piece I. The core piece I has a first region I1 and a second region I2. The first region I1 is a region surrounded by the bridge inner circumferential edge G of the rotor core 32, the bridge center line BC, a circumscribed circle N of the rotor core 32, and the inner wall of the first magnet hole H1 (the region closer to the left side than the bridge center line BC in the drawing). The second region I2 is a region surrounded by the bridge inner circumferential edge G of the rotor core 32, the bridge center line BC, a circumscribed circle N of the rotor core 32, and the inner wall of the second magnet hole H2 (the region closer to the right side than the bridge center line BC in the drawing). The first region I1 and the second region I2 have asymmetric shapes with respect to the d-axis.

A hole and notch present in the first region I1 is referred to as Km. In the example illustrated, the notch Km does not exist in the first region I1, but the notch Km may exist in the first region I1. An area of a region surrounded by a ridge line of the hole Km and an area of a region surrounded by a ridge line of the notch Km and the circumscribed circle N of the rotor core 32 are referred to as Skm. A center of gravity in a case where thick parts exist in the region surrounded by the ridge line of the hole Km and the region surrounded by the ridge line of the notch Km and the circumscribed circle N of the rotor core 32 is referred to as Kgm. However, both m mentioned above are natural numbers.

A hole and notch present in the second region I2 is referred to as Jn. An area of a region surrounded by a ridge line of the hole Jn and an area of a region surrounded by a ridge line of the notch Jn and the circumscribed circle N of the rotor core 32 are referred to as Sjn. A center of gravity in a case where thick parts exist in the region surrounded by the ridge line of the hole Jn and the region surrounded by the ridge line of the notch Jn and the circumscribed circle N of the rotor core 32 is referred to as Jgn. However, n above is a natural number in both cases.

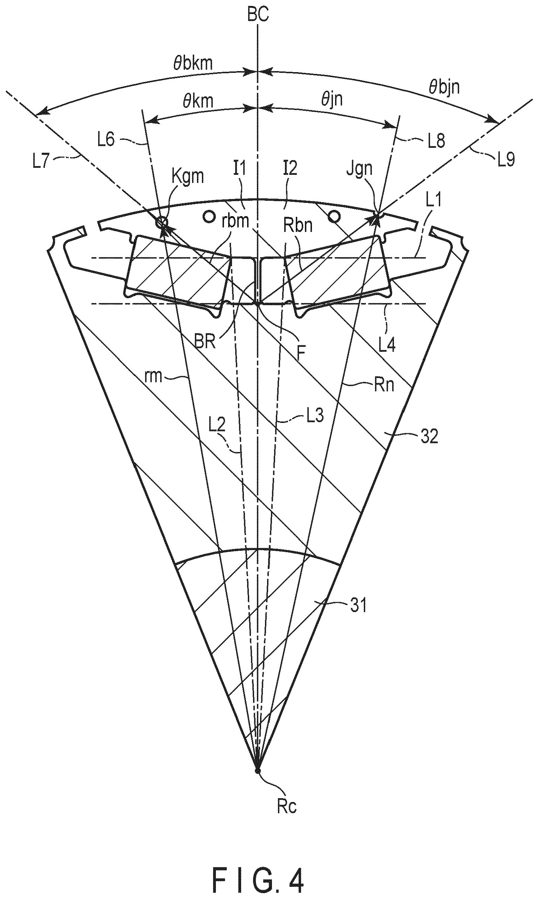

As shown in FIG. 4, a distance from the central axis Rc to the center of gravity Kgm is referred to as rm. A distance from an intersection F of the bridge center line BC and the fourth straight line L4 to the center of gravity Kgm is referred to as rbm. A straight line passing through the central axis Rc and the center of gravity Kgm is referred to as a sixth straight line L6. An angle formed by the sixth straight line L6 and the bridge center line BC is referred to as θkm. A straight line passing through the intersection F and the center of gravity Kgm is referred to as a seventh straight line L7. An angle formed by the seventh straight line L7 and the bridge center line BC is referred to as θbkm.

A distance from the central axis Rc to the center of gravity Jgn is referred to as Rn. A distance from an intersection F to the center of gravity Jgn is referred to as Rbn. A straight line passing through the central axis Rc and the center of gravity Jgn is referred to as an eighth straight line L8. An angle formed by the eighth straight line L8 and the bridge center line BC is referred to as θjn. A straight line passing through the intersection F and the center of gravity Jgn is referred to as a ninth straight line L9. An angle formed by the ninth straight line L9 and the bridge center line BC is referred to as θbjn. The sixth straight line L6 and the seventh straight line L7 passing through one center of gravity Kgm of the first region I1 are illustrated in FIG. 4, but a plurality of sixth straight lines L6 and seventh straight lines L7 exist when a plurality of centers of gravity Kgm exist. The eighth straight line L8 and the ninth straight line L9 passing through one center of gravity Jgn of the second region I2 are illustrated in FIG. 4, but a plurality of eighth straight lines L8 and ninth straight lines L9 exist when a plurality of centers of gravity Jgn exist.

At this time, the rotor core 32 has a structure that satisfies the following equation (1).

$$\sum S_{km} r_m r_{bm} \sin(\theta_{bkm} - \theta_{km}) = \sum S_{jn} R_n R_{bn} \sin(\theta_{bjn} - \theta_{jn})$$

$$\ldots (1)$$

The first region I1 and the second region I2 of the core piece I have an asymmetric shape with respect to the d-axis from the viewpoints of noise reduction at the time when the rotor 3 rotates in one direction, weight reduction of the rotor core 32, and control of a magnetic path, and the like. In other words, the area $S_{km}$ is different from the area $S_{jn}$, the distance $r_m$ is different from the distance $R_n$, the distance $r_{bm}$ is different from the distance $R_{bn}$, and a difference $(\theta_{bkm} - \theta_{km})$ between the angle $\theta_{bkm}$ and the angle $\theta_{km}$ is different from a difference $(\theta_{bjn} - \theta_{jn})$ between the angle $\theta_{bjn}$ and the angle $\theta_{jn}$.

Even in such a case, since the rotor core 32 has the structure satisfying the above equation, the weight distribution in the first region I1 can be matched with the weight distribution in the second region I2, and a bending stress acting on the bridge BR due to the difference between the centrifugal force generated in the first region I1 and the centrifugal force generated in the second region I2 when the rotor 3 rotates can be reduced.

Next, other configuration examples of the embodiments will be described. Each of the following configuration examples will be described with reference to an enlarged transverse cross-sectional view showing a part of the rotor core 32. In the other configuration examples described below, the same parts as those in the above-described configuration example will be denoted by the same reference numerals, and detailed description thereof will be omitted or simplified, and parts different from the above-described configuration example will be mainly described in detail.

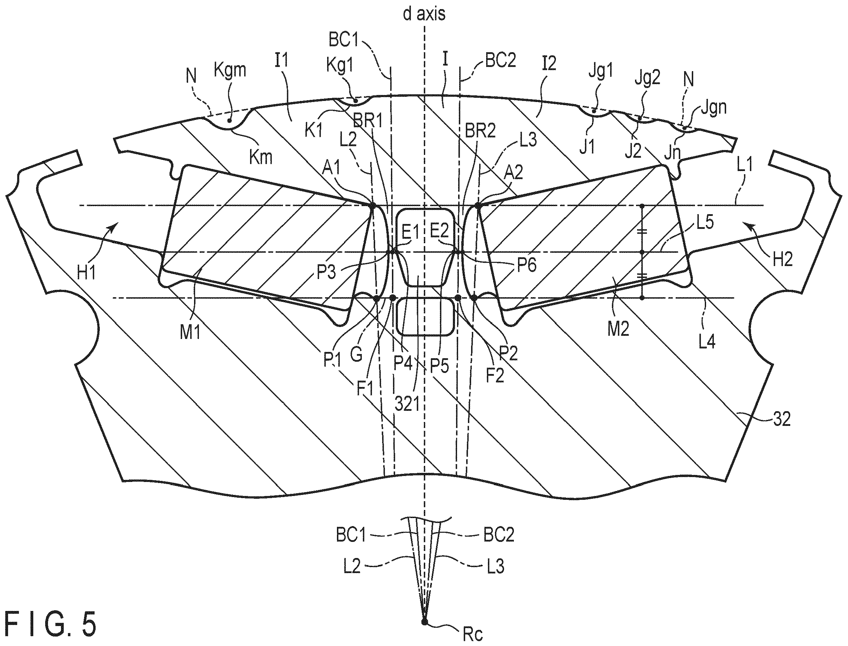

FIG. 5 is an enlarged transverse cross-sectional view showing the rotor core 32 for one magnetic pole of the rotor 3.

In the configuration example shown in FIG. 5, the rotor core 32 includes a hole 321 located between the first magnet hole H1 and the second magnet hole H2 in the circumferential direction. The hole 321 passes through the rotor core 32 in the axial direction.

The rotor core 32 includes a first bridge BR1 and a second bridge BR2 that are thick portions existing in a region surrounded by the first straight line L1, the second straight line L2, the third straight line L3, and the fourth straight line L4. The definitions of the first straight line L1, the second straight line L2, the third straight line L3, and the fourth straight line L4 have been described with reference to FIG. 3. The first bridge BR1 extends radially between the d-axis and the second straight line L2. The second bridge BR2 extends radially between the d-axis and the third straight line L3.

A definition of a first bridge center line BC1 of the first bridge BR1 will be described below. In other words, when a straight line equidistant from the first straight line L1 and the fourth straight line L4 is referred to as a fifth straight line L5, the first bridge BR1 intersects the fifth straight line L5. A point on the fifth straight line L5 among the points on the inner wall of the first magnet hole H1 is referred to as a third point P3. A point on the fifth straight line L5 between the second straight line L2 and the d-axis, among points on the inner wall of the hole 321, is referred to as a fourth point P4. A point on the fifth straight line L5 equidistant from the third point P3 and the fourth point P4 is referred to as a first middle point E1. At this time, the first bridge center line BC1 is defined as a line passing through the first middle point E1 and the central axis Rc. A point where the first bridge center line BC1 intersects the fourth straight line L4 is referred to as a first intersection F1.

A definition of a second bridge center line BC2 of the second bridge BR2 will be described below. In other words, the second bridge BR2 intersects the fifth straight line L5. A point on the fifth straight line L5 between the d-axis and the third straight line L3, among points on the inner wall of the hole 321, is referred to as a fifth point P5. A point on the fifth straight line L5 among the points on the inner wall of the second magnet hole H2 is referred to as a sixth point P6. A point on the fifth straight line L5 equidistant from the fifth point P5 and the sixth point P6 is referred to as a second middle point E2. At this time, the second bridge center line BC2 is defined as a line passing through the second middle point E2 and the central axis Rc. A point where the second bridge center line BC2 intersects the fourth straight line L4 is referred to as a second intersection F2. The d-axis is located between the first bridge center line BC1 and the second bridge center line BC2.

When a line segment connecting the first point P1 and the second point P2 on the fourth straight line L4 is the bridge inner circumferential edge G, the first region I1 of the core piece I is a region surrounded by the bridge inner circumferential edge G, the first bridge center line BC1, the circumscribed circle N of the rotor core 32, and the inner wall of the first magnet hole H1 (the region on the left side from the first bridge center line BC1 in the drawing). The second region I2 of the core piece I is a region surrounded by the bridge inner circumferential edge G of the rotor core 32, the second bridge center line BC2, a circumscribed circle N of the rotor core 32, and the inner wall of the second magnet hole H2 (the region closer to the right side than the second bridge center line BC2 in the drawing). The first region I1 and the second region I2 have asymmetric shapes with respect to the d-axis.

A hole and notch present in the first region I1 is referred to as Km. In the example illustrated, the hole Km does not exist in the first region I1, but the hole Km may exist in the first region I1. An area of a region surrounded by a ridge line of the hole Km and an area of a region surrounded by a ridge line of the notch Km and the circumscribed circle N of the rotor core 32 are referred to as Skm. A center of gravity in a case where thick parts exist in the region surrounded by the ridge line of the hole Km and the region surrounded by the ridge line of the notch Km and the circumscribed circle N of the rotor core 32 is referred to as Kgm. However, both m mentioned above are natural numbers.

A hole and notch present in the second region I2 is referred to as Jn. In the example illustrated, the hole Jn does not exist in the second region I2, but the hole Jn may exist in the second region I2. An area of a region surrounded by a ridge line of the hole Jn and an area of a region surrounded by a ridge line of the notch Jn and the circumscribed circle N of the rotor core 32 are referred to as Sjn. A center of gravity in a case where thick parts exist in the region surrounded by the ridge line of the hole Jn and the region surrounded by the ridge line of the notch Jn and the circumscribed circle N of the rotor core 32 is referred to as Jgn. However, n above is a natural number in both cases.

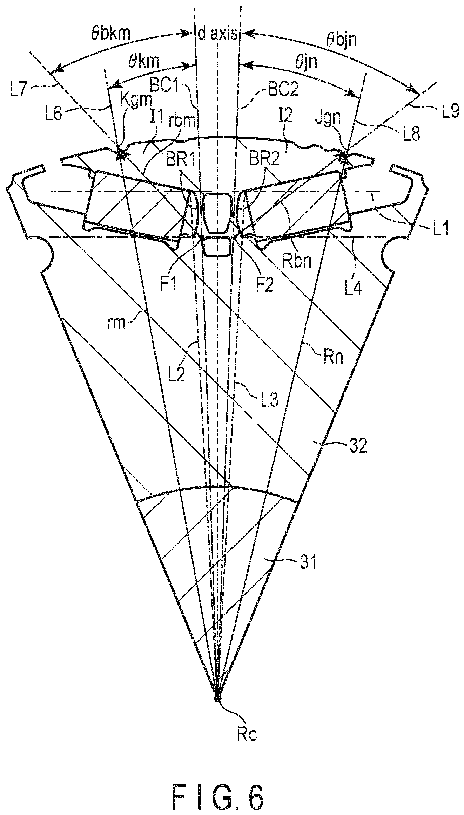

As shown in FIG. 6, a distance from the central axis Rc to the center of gravity Kgm is referred to as rm. A distance from a first intersection F1 of the first bridge center line BC1 and the fourth straight line L4 to the center of gravity Kgm is referred to as rbm. A straight line passing through the central axis Rc and the center of gravity Kgm is referred to as a sixth straight line L6. An angle formed by the sixth straight line L6 and the first bridge center line BC1 is referred to as $\theta$km. A straight line passing through the first intersection F1 and the center of gravity Kgm is referred to as a seventh straight line L7. An angle formed by the seventh straight line L7 and the first bridge center line BC1 is referred to as $\theta$bkm.

A distance from the central axis Rc to the center of gravity Jgn is referred to as Rn. A distance from a second intersection F2 of the second bridge center line BC2 and the fourth straight line L4 to the center of gravity Jgn is referred to as Rbn. A straight line passing through the central axis Rc and the center of gravity Jgn is referred to as an eighth straight line L8. An angle formed by the eighth straight line L8 and the second bridge center line BC2 is referred to as $\theta$jn. A straight line passing through the second intersection F2 and the center of gravity Jgn is referred to as a ninth straight line L9. An angle formed by the ninth straight line L9 and the second bridge center line BC2 is referred to as $\theta$bjn. The sixth straight line L6 and the seventh straight line L7 passing through one center of gravity Kgm of the first region I1 are illustrated in FIG. 6, but a plurality of sixth straight lines L6 and seventh straight lines L7 exist when a plurality of centers of gravity Kgm exist. The eighth straight line L8 and the ninth straight line L9 passing through one center of gravity Jgn of the second region I2 are illustrated in FIG. 6, but a plurality of eighth straight lines L8 and ninth straight lines L9 exist when a plurality of centers of gravity Jgn exist.

At this time, the rotor core 32 has a structure that satisfies the above equation (1).

For this reason, in the configuration example shown in FIG. 5 and FIG. 6, too, the weight distribution in the first region I1 can be matched with the weight distribution in the second region I2, and a bending stress acting on the first bridge BR1 and the second bridge BR2 due to the difference between the centrifugal force generated in the first region I1 and the centrifugal force generated in the second region I2 when the rotor 3 rotates can be reduced.

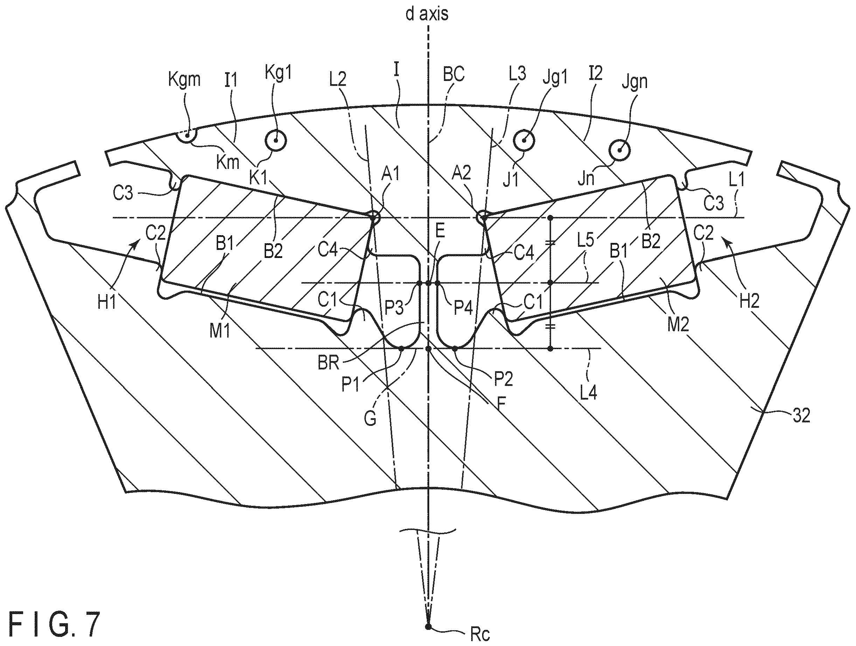

FIG. 7 is an enlarged transverse cross-sectional view showing the rotor core 32 for one magnetic pole of the rotor 3.

In the configuration example shown in FIG. 7, the rotor core 32 includes a pair of holding protrusions C1 and C2 protruding from an edge B1 opposed to one long side of the first permanent magnet M1 at both longitudinal ends of the first permanent magnet M1, and a pair of holding protrusions C3 and C4 protruding from an edge B2 opposed to the other long side of the first permanent magnet M1. The holding protrusion C3 is opposed to the holding protrusion C2, and the holding protrusion C4 is opposed to the holding protrusion C1. The first permanent magnet M1 is held by these holding protrusions C1 to C4. In addition, the rotor core 32 also includes holding protrusions C1 to C4 to hold the second permanent magnet M2.

The rotor core 32 includes a bridge BR that is a thick portion existing in a region surrounded by the first straight line L1, the second straight line L2, the third straight line L3, and the fourth straight line L4. The definitions of the first straight line L1, the second straight line L2, the third straight line L3, and the fourth straight line L4 have been described with reference to FIG. 3. The bridge center line BC is defined as a line passing through the middle point E and the central axis Rc as described with reference to FIG. 3. The bridge center line BC coincides with the d-axis.

When a line segment connecting the first point P1 and the second point P2 on the fourth straight line L4 is the bridge inner circumferential edge G, the first region I1 of the core piece I is a region surrounded by the bridge inner circumferential edge G, the bridge center line BC, the circumscribed circle N of the rotor core 32, and the inner wall of the first magnet hole H1 (the region on the left side from the bridge center line BC in the drawing). The second region I2 of the core piece I is a region surrounded by the bridge inner circumferential edge G of the rotor core 32, the bridge center line BC, a circumscribed circle N of the rotor core 32, and the inner wall of the second magnet hole H2 (the region closer to the right side than the bridge center line BC in the drawing). The first region I1 and the second region I2 have asymmetric shapes with respect to the d-axis.

A hole and notch present in the first region I1 is referred to as Km. An area of a region surrounded by a ridge line of the hole Km and an area of region surrounded by a ridge line of the notch Km and the circumscribed circle N of the rotor core 32 are referred to as Skm. A center of gravity in a case where thick parts exist in the region surrounded by the ridge line of the hole Km and the region surrounded by the ridge line of the notch Km and the circumscribed circle N of the rotor core 32 is referred to as Kgm. However, both m mentioned above are natural numbers.

A hole and notch present in the second region I2 is referred to as Jn. In the example illustrated, the notch Jn does not exist in the second region I2, but the notch Jn may exist in the second region 12. An area of a region surrounded by a ridge line of the hole Jn and an area of a region surrounded by a ridge line of the notch Jn and the circumscribed circle N of the rotor core 32 are referred to as Sjn. A center of gravity in a case where thick parts exist in the region surrounded by the ridge line of the hole Jn and the region surrounded by the ridge line of the notch Jn and the circumscribed circle N of the rotor core 32 is referred to as Jgn. However, n above is a natural number in both cases.

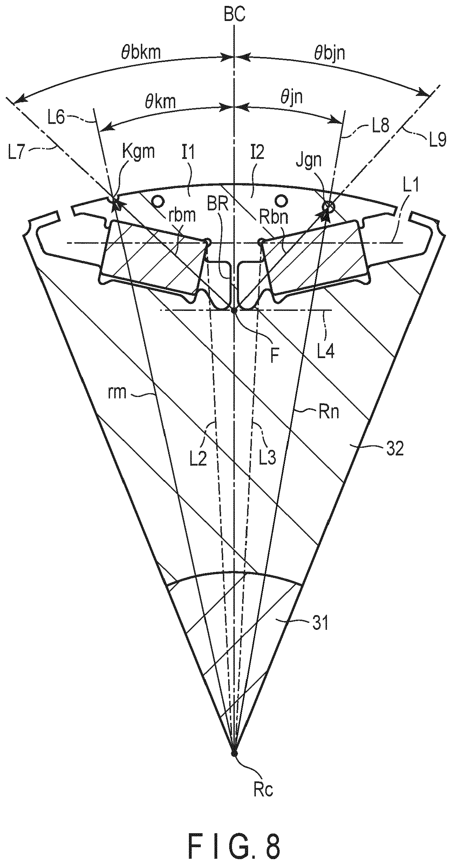

As shown in FIG. 8, a distance from the central axis Rc to the center of gravity Kgm is referred to as rm. A distance from an intersection F to the center of gravity Kgm is referred to as rbm. A straight line passing through the central axis Rc and the center of gravity Kgm is referred to as a sixth straight line L6. An angle formed by the sixth straight line L6 and the bridge center line BC is referred to as θkm. A straight line passing through the intersection F and the center of gravity Kgm is referred to as a seventh straight line L7. An angle formed by the seventh straight line L7 and the bridge center line BC is referred to as θbkm.

A distance from the central axis Rc to the center of gravity Jgn is referred to as Rn. A distance from an intersection F to the center of gravity Jgn is referred to as Rbn. A straight line passing through the central axis Rc and the center of gravity Jgn is referred to as an eighth straight line L8. An angle formed by the eighth straight line L8 and the bridge center line BC is referred to as θjn. A straight line passing through the intersection F and the center of gravity Jgn is referred to as a ninth straight line L9. An angle formed by the ninth straight line L9 and the bridge center line BC is referred to as θbjn. The sixth straight line L6 and the seventh straight line L7 passing through one center of gravity Kgm of the first region I1 are illustrated in FIG. 8, but a plurality of sixth straight lines L6 and seventh straight lines L7 exist when a plurality of centers of gravity Kgm exist. The eighth straight line L8 and the ninth straight line L9 passing through one center of gravity Jgn of the second region I2 are illustrated in FIG. 8, but a plurality of eighth straight lines L8 and ninth straight lines L9 exist when a plurality of centers of gravity Jgn exist.

At this time, the rotor core 32 has a structure that satisfies the above equation (1).

For this reason, in the configuration example shown in FIG. 7 and FIG. 8, too, the weight distribution in the first region I1 can be matched with the weight distribution in the second region I2, and a bending stress acting on the bridge BR due to the difference between the centrifugal force generated in the first region I1 and the centrifugal force generated in the second region I2 when the rotor 3 rotates can be reduced.

As described above, the rotor of the rotary electrical machine capable of suppressing leakage flux and reducing a stress against a centrifugal force can be provided according to the embodiments.

The present invention is not limited to the embodiments described above, and the constituent elements of the invention can be modified in various ways without departing from the spirit and scope of the invention. Moreover, various inventions can be formed by appropriately combining a plurality of constituent elements disclosed in the above embodiments. For example, some of the constituent elements disclosed in the embodiments may be deleted. Furthermore, constituent elements described in different embodiments may be combined arbitrarily.

For example, the number of magnetic poles, the dimensions, the shape, and the like of the rotor 3 are not limited to the above-described embodiments, and can be variously changed in accordance with the design.

The number of permanent magnets M in each magnetic pole of the rotor 3 is not limited to two, but can be increased as needed.

Reference Signs List

1...rotary motor, 2...stator, 3... rotor, Rc...central axis, 31...shaft, 32...rotor core, 32S... outer circumferential surface, H1... first magnet hole, H2... second magnet hole, 321... hole, BR... bridge, M1... first permanent magnet, M2... second permanent magnet.

**Claims**

1. A rotor of a rotary electrical machine, comprising:

   a cylindrical shaft;
   a rotor core configured by stacking a plurality of annular electromagnetic steel sheets including an inner hole into which the shaft is inserted, in a direction of a central axis of the shaft, each including a first magnet hole and a second magnet hole penetrating to a cylindrical outer circumferential surface; and

a first permanent magnet inserted into the first magnet hole and a second permanent magnet inserted into the second magnet hole, constituting a magnetic pole in the rotor core,

when an axis passing through a central axis of the shaft and a center of the magnetic pole in a circumferential direction is referred to as a d-axis, a straight line passing through a first corner closest to the d-axis of the first permanent magnet and a second corner closest to the d-axis of the second permanent magnet is referred to as a first straight line, a straight line passing through the first corner and the central axis is referred to as a second straight line, a straight line passing through the second corner and the central axis is referred to as a third straight line, a point on a innermost circumferential side between the second straight line and the third straight line, among points on an inner wall of the first magnet hole, is referred to as a first point, a point on a innermost circumferential side between the second straight line and the third straight line, among points on an inner wall of the second magnet hole, is referred to as a second point, and a straight line passing through the first point and the second point is referred to as a fourth straight line, a bridge that is a thick portion of the rotor core existing in a region surrounded by the first straight line, the second straight line, the third straight line, and the fourth straight line,

when a straight line equidistant from the first straight line and the fourth straight line is referred to as a fifth straight line, a point on the fifth straight line among the points on the inner wall of the first magnet hole is referred to as a third point, a point on the fifth straight line among the points on the inner wall of the second magnet hole is referred to as a fourth point, a point on the fifth straight line equidistant from the third point and the fourth point is referred to as a middle point, a straight line passing through the middle point and the central axis is referred to as a bridge center line, a line segment connecting the first point and the second point on the fourth straight line is referred to as a bridge inner circumferential edge, a hole and a notch existing in a first region surrounded by the bridge inner circumferential edge, the bridge center line, a circumscribed circle of the rotor core, and an inner wall of the first magnet hole, of the rotor core, are referred to as Km, an area of a region surrounded by a ridge line of the hole Km and an area of a region surrounded by a ridge line of the notch Km and the circumscribed circle of the rotor core are referred to as Skm, a center of gravity in a case where thick portions exist in the region surrounded by the ridge line of the hole Km and the region surrounded by the ridge line of the notch Km and the circumscribed circle of the rotor core is referred to as Kgm, a distance from the central axis to the center of gravity Kgm is referred to as rm, a distance from an intersection of the bridge center line and the fourth straight line to the center of gravity Kgm is referred to as rbm, a straight line passing through the central axis and the center of gravity Kgm is referred to as a sixth straight line, an angle formed by the sixth straight line and the bridge center line is referred to as $\theta km$, a straight line passing through the intersection and the center of gravity Kgm is referred to as a seventh straight line, an angle formed by the seventh straight line and the bridge center line is referred to as $\theta bkm$ (where each m mentioned above is a natural number), a hole and a notch existing in a second region surrounded by the bridge inner circumferential edge, the bridge center line, the circumscribed circle of the rotor core, and an inner wall of the second magnet hole, of the rotor core, are referred to as Jn, an area of a region surrounded by a ridge line of the hole Jn and an area of a region surrounded by a ridge line of the notch Jn and the circumscribed circle of the rotor core are referred to as Sjn, a center of gravity in a case where thick portions exist in the region surrounded by the ridge line of the hole Jn and the region surrounded by the ridge line of the notch Jn and the circumscribed circle of the rotor core is referred to as Jgn, a distance from the central axis to the center of gravity Jgn is referred to as Rn, a distance from the intersection to the center of gravity Jgn is referred to as Rbn, a straight line passing through the central axis and the center of gravity Jgn is referred to as an eighth straight line, an angle formed by the eighth straight line and the bridge center line is referred to as $\theta jn$, a straight line passing through the intersection and the center of gravity Jgn is referred to as a ninth straight line, and an angle formed by the ninth straight line and the bridge center line is referred to as $\theta bjn$ (where each n mentioned above is a natural number), the first region and the second region being asymmetric with respect to the d-axis and the rotor core having a structure satisfying the following equation.

$$\sum S_{km} r_m r_{bm} \sin(\theta_{bkm} - \theta_{km}) = \sum S_{jn} R_n R_{bn} \sin(\theta_{bjn} - \theta_{jn})$$

2. A rotor of a rotary electrical machine, comprising:

   a cylindrical shaft;
   a rotor core configured by stacking a plurality of annular electromagnetic steel sheets including an inner hole into which the shaft is inserted, in a direction of a central axis of the shaft, each including a first magnet hole and a second magnet hole penetrating to a cylindrical outer circumferential surface, and a hole located between the first magnet hole and the second magnet hole in a circumferential direction; and

a first permanent magnet inserted into the first magnet hole and a second permanent magnet inserted into the second magnet hole, constituting a magnetic pole in the rotor core,

when an axis passing through a central axis of the shaft and a center of the magnetic pole in a circumferential direction is referred to as a d-axis, a straight line passing through a first corner closest to the d-axis of the first permanent magnet and a second corner closest to the d-axis of the second permanent magnet is referred to as a first straight line, a straight line passing through the first corner and the central axis is referred to as a second straight line, a straight line passing through the second corner and the central axis is referred to as a third straight line, a point on a innermost circumferential side between the second straight line and the third straight line, among points on an inner wall of the first magnet hole, is referred to as a first point, a point on a innermost circumferential side between the second straight line and the third straight line, among points on an inner wall of the second magnet hole, is referred to as a second point, and a straight line passing through the first point and the second point is referred to as a fourth straight line, a first bridge and a second bridge that are thick portions of the rotor core existing in a region surrounded by the first straight line, the second straight line, the third straight line, and the fourth straight line,

when a straight line equidistant from the first straight line and the fourth straight line is referred to as a fifth straight line, a point on the fifth straight line among the points on the inner wall of the first magnet hole is referred to as a third point, a point on the fifth straight line between the second straight line and the d-axis among the points on the inner wall of the hole is referred to as a fourth point, a point on the fifth straight line between the d-axis and the third straight line among the points on the inner wall of the hole is referred to as a fifth point, a point on the fifth straight line among the points on the inner wall of the second magnet hole is referred to as a sixth point, a point equidistant from the third point and the fourth point on the fifth straight line is referred to as a first middle point, a point equidistant from the fifth point and the sixth point on the fifth straight line is referred to as a second middle point, a straight line passing through the first middle point and the central axis is referred to as a first bridge center line, a straight line passing through the second middle point and the central axis is referred to as a second bridge center line, a line segment connecting the first point and the second point on the fourth straight line is referred to as a bridge inner circumferential edge, a hole and a notch existing in a first region surrounded by the bridge inner circumferential edge, the first bridge center line, a circumscribed circle of the rotor core, and an inner wall of the first magnet hole, of the rotor core, are referred to as Km, an area of a region surrounded by a ridge line of the hole Km and an area of a region surrounded by a ridge line of the notch Km and the circumscribed circle of the rotor core are referred to as Skm, a center of gravity in a case where thick portions exist in the region surrounded by the ridge line of the hole Km and the region surrounded by the ridge line of the notch Km and the circumscribed circle of the rotor core is referred to as Kgm, a distance from the central axis to the center of gravity Kgm is referred to as $r_m$, a distance from a first intersection of the first bridge center line and the fourth straight line to the center of gravity Kgm is referred to as $r_{bm}$, a straight line passing through the central axis and the center of gravity Kgm is referred to as a sixth straight line, an angle formed by the sixth straight line and the first bridge center line is referred to as $\theta_{km}$, a straight line passing through the first intersection and the center of gravity Kgm is referred to as a seventh straight line, an angle formed by the seventh straight line and the first bridge center line is referred to as $\theta_{bkm}$ (where each m mentioned above is a natural number), a hole and a notch existing in a second region surrounded by the bridge inner circumferential edge, the second bridge center line, a circumscribed circle of the rotor core, and an inner wall of the second magnet hole, of the rotor core, are referred to as Jn, an area of a region surrounded by a ridge line of the hole Jn and an area of a region surrounded by the ridge line of the notch Jn and the circumscribed circle of the rotor core are referred to as Sjn, a center of gravity in a case where thick portions exist in the region surrounded by the ridge line of the hole Jn and the region surrounded by the ridge line of the notch Jn and the circumscribed circle of the rotor core is referred to as Jgn, a distance from the central axis to the center of gravity Jgn is referred to as $R_n$, a distance from a second intersection of the second bridge center line and the fourth straight line to the center of gravity Jgn is referred to as $R_{bn}$, a straight line passing through the central axis and the center of gravity Jgn is referred to as an eighth straight line, an angle formed by the eighth straight line and the second bridge center line is referred to as $\theta_{jn}$, a straight line passing through the second intersection and the center of gravity Jgn is referred to as a ninth straight line, and an angle formed by the ninth straight line and the second bridge center line is referred to as $\theta_{bjn}$ (where each n mentioned above is a natural number), the first region and the second region being asymmetric with respect to the d-axis and the rotor core having a structure satisfying the following equation.

$$\sum S_{km} r_m r_{bm} \sin(\theta_{bkm} - \theta_{km}) = \sum S_{jn} R_n R_{bn} \sin(\theta_{bjn} - \theta_{jn})$$

F I G. 1

EP 4 436 010 A1

F I G. 2

13

F I G. 3

F I G. 4

F I G. 5

F I G. 6

F I G. 7

FIG. 8

## INTERNATIONAL SEARCH REPORT

| International application No. |
|---|
| **PCT/JP2021/042107** |

| A. CLASSIFICATION OF SUBJECT MATTER |
|---|
| *H02K 1/276*(2022.01)i<br>FI: H02K1/276 |
| According to International Patent Classification (IPC) or to both national classification and IPC |

| B. FIELDS SEARCHED |
|---|
| Minimum documentation searched (classification system followed by classification symbols)<br>H02K1/276 |
| Documentation searched other than minimum documentation to the extent that such documents are included in the fields searched<br><br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| Electronic data base consulted during the international search (name of data base and, where practicable, search terms used) |

C. DOCUMENTS CONSIDERED TO BE RELEVANT

| Category* | Citation of document, with indication, where appropriate, of the relevant passages | Relevant to claim No. |
|---|---|---|
| A | WO 2020/017262 A1 (HITACHI AUTOMOTIVE SYSTEMS, LTD.) 23 January 2020 (2020-01-23)<br>   paragraphs [0008]-[0013], fig. 1-3 | 1-2 |
| A | US 2011/0291515 A1 (LI, Yue) 01 December 2011 (2011-12-01)<br>   paragraph [0035], fig. 8 | 1-2 |
| A | JP 2013-99193 A (SUZUKI MOTOR CORP.) 20 May 2013 (2013-05-20)<br>   paragraphs [0035]-[0045], fig. 1, 5 | 1-2 |
| A | WO 2021/205713 A1 (MITSUBISHI ELECTRIC CORP.) 14 October 2021 (2021-10-14)<br>   paragraphs [0026]-[0031], fig. 9 | 1-2 |
| A | JP 2007-312591 A (TOYOTA INDUSTRIES CORP.) 29 November 2007 (2007-11-29)<br>   paragraphs [0042]-[0063], fig. 1, 5-6 | 1-2 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 January 2022** | **25 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/042107**

| Patent document cited in search report | | | Publication date (day/month/year) | Patent family member(s) | | | Publication date (day/month/year) |
|---|---|---|---|---|---|---|---|
| WO | 2020/017262 | A1 | 23 January 2020 | JP | 2020-14322 | A | |
| US | 2011/0291515 | A1 | 01 December 2011 | DE | 102011102959 | A1 | |
| | | | | CN | 102263445 | A | |
| JP | 2013-99193 | A | 20 May 2013 | (Family: none) | | | |
| WO | 2021/205713 | A1 | 14 October 2021 | (Family: none) | | | |
| JP | 2007-312591 | A | 29 November 2007 | US | 2007/0257576 | A1 | |
| | | | | paragraphs [0065]-[0096], fig. 1, 5-6 | | | |
| | | | | EP | 1848092 | A2 | |
| | | | | CN | 101060261 | A | |

Form PCT/ISA/210 (patent family annex) (January 2015)

**EP 4 436 010 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020014322 A